# EUROPEAN PATENT APPLICATION

(11) **EP 4 692 710 A1**
(43) Date of publication of application: **11.02.2026**
(21) Application number: 24780456.0
(22) Date of filing: 27.03.2024
(51) Int. Cl.: F28D 19/02, C04B 7/36, F27D 17/00, F28D 20/00

(54) **HEAT EXCHANGER AND HEAT EXCHANGE SYSTEM**

(30) Priority: 29.03.2023 JP 2023053459
(71) Applicant: Taiheiyo Cement Corporation, Bunkyo-ku Tokyo 112-8503 (JP)
(72) Inventor: KIMURA,Takayuki, Tokyo 112-8503 (JP); HONMA,Kenichi, Tokyo 112-8503 (JP); MIYA,Yurika, Tokyo 112-8503 (JP); YAMAMOTO,Yasushi, Tokyo 135-0042 (JP)
(74) Representative: Hannke, Christian
(86) International application number: PCT/JP2024/012262
(87) International publication number: WO 2024/204354

(57) **Abstract**

Provided is a heat exchanger capable of increasing the installation density of a heat transfer medium in the heat exchanger while expanding the selectivity of the heat transfer medium usable as compared with the related art. The heat exchanger includes: a first heat exchange chamber including a first region filled with a granular heat transfer medium; a first introduction port configured to introduce a high-temperature first gas to be treated into the first region; a first discharge port positioned above the first introduction port in the vertical direction and configured to discharge gas from the first heat exchange chamber; a second heat exchange chamber positioned below the first heat exchange chamber in the vertical direction and including a second region filled with the granular heat transfer medium that has flowed in from the first heat exchange chamber; a second introduction port configured to introduce a second gas, having a temperature lower than that of the first gas, into the second region; a second discharge port positioned above the second introduction port in the vertical direction and configured to discharge gas from the second heat exchange chamber; and a regulating member disposed at one or more locations between the end of the first region on the side of the second heat exchange chamber and the end of the second region on the side of the first heat exchange chamber, the regulating member being capable of controlling a gas flow rate.

## Description

### TECHNICAL FIELD

The present invention relates to a heat exchanger, and in particular to a heat exchanger that performs heat exchange of a gas through a solid heat transfer medium. The present invention also relates to a heat exchange system including such a heat exchanger.

### BACKGROUND ART

In recent years, reducing carbon dioxide gas (CO₂) emissions has become an important issue in order to curb global warming. In the cement manufacturing process as well, there is a demand for the efficient recovery of carbon dioxide emitted during the process. From this perspective, the present applicant has proposed a technique in which a calcining furnace, together with a preheating device, is disposed on the upstream side of a rotary kiln for promoting decarboxylation of cement raw materials (see Patent Document 1).

In addition, a technique for cooling high-temperature gas through heat exchange using a granular heat transfer medium is disclosed in Patent Document 2 below.

### PRIOR ART DOCUMENT

### PATENT DOCUMENT

Patent Document 1: JP-A-2022-96064
Patent Document 2: JP-A-2003-254688

### SUMMARY OF THE INVENTION

### PROBLEMS TO BE SOLVED BY THE INVENTION

From the viewpoint of enhancing heat utilization efficiency, it is preferable to perform heat exchange on high-temperature exhaust gas from a calcining furnace and reuse the exhaust gas. Therefore, the present inventors have considered reducing the temperature of high-temperature exhaust gas from the calcining furnace by using the heat exchanger disclosed in Patent Document 2.

However, according to the method described in Patent Document 2, it is necessary to use a heat transfer medium having a particular specific gravity and particle size, which restricts the selection of the heat transfer medium. In addition, the amount of heat transfer medium that can be used is small relative to the overall size of the heat exchanger, and there remains room for further improvement in heat recovery efficiency.

In view of the above problems, it is an object of the present invention to provide a heat exchanger and a heat exchange system that are capable of increasing the installation density of the heat transfer medium in the heat exchanger while expanding the selection of the heat transfer medium that can be used, as compared with the prior art.

### MEANS FOR SOLVING THE PROBLEMS

A heat exchanger according to the present invention includes:
a first heat exchange chamber including a first region filled with a granular heat transfer medium;
a first introduction port configured to introduce a high-temperature first gas to be treated into the first region;
a first discharge port positioned above the first introduction port in the vertical direction and configured to discharge gas from the first heat exchange chamber;
a second heat exchange chamber positioned below the first heat exchange chamber in the vertical direction and connecting with the first heat exchange chamber, the second heat exchange chamber including a second region filled with the granular heat transfer medium that has flowed in from the first heat exchange chamber;
   a second introduction port configured to introduce a second gas, having a temperature lower than that of the first gas, into the second region;
a second discharge port positioned above the second introduction port in the vertical direction and configured to discharge gas from the second heat exchange chamber; and
a regulating member disposed at one or more locations between the end of the first region on the side of the second heat exchange chamber and the end of the second region on the side of the first heat exchange chamber, the regulating member being capable of controlling a gas flow rate.

The heat exchanger includes a regulating member capable of controlling a gas flow rate within a connecting part that connects a plurality of heat exchange chambers. Therefore, the backward flow of low-temperature gas from the second heat exchange chamber to the first heat exchange chamber can be suppressed.

In addition, the regulating member can prevent the granular heat transfer medium filled in the first heat exchange chamber from flowing out to the second heat exchange chamber. Accordingly, the granular heat transfer medium can be densely packed, allowing the region (the first region) for heat exchange with the high-temperature first gas to be reduced in size. Hereinafter, for convenience, the granular heat transfer medium filled in the first heat exchange chamber may be referred to as the "first heat transfer medium."

Moreover, according to the above configuration, by filling the region (the first region) in the first heat exchange chamber with the granular heat transfer medium, heat exchange with the first gas can be performed without subjecting the specific gravity or particle size of materials usable as the granular heat transfer medium to significant restrictions, as in Patent Document 2. Accordingly, the granular heat transfer medium may be made of a general-purpose material, such as a ceramic (e.g., alumina) or a metal (e.g., iron), and the particle size thereof is not particularly restricted as long as it is large enough to allow filling in the first region.

According to the heat exchanger, the high-temperature first gas introduced through the first introduction port is supplied to the region (the first region) filled with the granular heat transfer medium in the first heat exchange chamber, where heat exchange is performed between the first gas and the granular heat transfer medium. The first gas after heat exchange is discharged from the first discharge port. The presence of the regulating member suppresses the backward flow of gas in the second heat exchange chamber, into which the low-temperature second gas is introduced, into the first heat exchange chamber.

When the regulating member is opened at a predetermined timing, the granular heat transfer medium (the first heat transfer medium) after having exchanged heat in the first heat exchange chamber is transferred to the second heat exchange chamber. Thereafter, when the regulating member is closed, the granular heat transfer medium transferred from the first heat exchange chamber, hereinafter referred to as the "second heat transfer medium" for convenience, remains in and fills the second heat exchange chamber. The low-temperature second gas introduced through the second introduction port is then supplied to the second heat transfer medium retained in the second heat exchange chamber, where heat exchange is again performed between the second gas and the second heat transfer medium. The second gas after heat exchange is discharged from the second discharge port.

As a result, the granular heat transfer medium filled in the first heat exchange chamber, which has been heated by exchanging heat with the high-temperature first gas, is cooled in the second heat exchange chamber by exchanging heat with the low-temperature second gas. Therefore, by causing the granular heat transfer medium recovered from the second heat exchange chamber to flow into the first heat exchange chamber from above, the heat transfer medium can be repeatedly reused. Specifically, the heat exchanger may include a conveyance mechanism configured to cause the granular heat transfer medium recovered from the second heat exchange chamber to flow into the first heat exchange chamber from above.

For example, exhaust gas from a calcining furnace disposed in a cement plant is introduced as the first gas through the first introduction port into the first heat exchange chamber. The gas discharged from the second discharge port is then used to preheat combustion-supporting gas introduced into the calcining furnace, thereby effectively utilizing the exhaust heat of high-temperature exhaust gas from the calcining furnace. In this case, for example, the exhaust gas from the calcining furnace used as the first gas has a temperature of about 800°C to 1,000°C, and the gas discharged from the second discharge port, which is used to preheat the combustion-supporting gas, has a temperature of about 400°C to 600°C.

In the above description, the gas discharged from the first discharge port may also be used to preheat the combustion-supporting gas. In addition, high-concentration carbon dioxide-containing gas recovered by a facility that recovers carbon dioxide from exhaust gas of a calcining furnace disposed in a cement plant may be introduced as the first gas through the first introduction port into the first heat exchange chamber.

The regulating member is preferably openable and closable. For example, it may be constituted by an openable and closable partition plate, valve, rotary valve, damper, gate, feeder, pusher, or the like. Closing the regulating member can stop the flow of gas and the granular heat transfer medium. The opening degree of the regulating member may also be adjustable by a control unit or the like. Specifically, the heat exchanger may include a thermometer installed in one or more locations selected from a group consisting of the first introduction port, the first discharge port, the second introduction port, and the second discharge port, and the opening degree of the regulating member may be adjusted based on temperature information measured by the thermometer.

The heat exchanger may further include:
a connecting part that connects the first heat exchange chamber and the second heat exchange chamber, and that guides to the second heat exchange chamber the granular heat transfer medium with which the first heat exchange chamber is filled; and
a first regulating member positioned on a downstream side of the first heat exchange chamber in the flowing direction of the granular heat transfer medium in the connecting part, or positioned at a boundary between the connecting part and the second heat exchange chamber, the first regulating member serving as the regulating member.

This configuration further enhances the effect of preventing the backward flow of low-temperature gas from the second heat exchange chamber, which is in a low-temperature environment, to the first heat exchange chamber, which is in a high-temperature environment.

The second discharge port may be positioned above the first regulating member in the vertical direction.

By employing the above configuration, the low-temperature second gas introduced into the second heat exchange chamber moves upward in the region (the second region) filled with the second heat transfer medium, exchanges heat while moving upward, and is then discharged from the second discharge port positioned above.

The heat exchanger may further include:
a second regulating member that is disposed in a position on an upstream side of the first regulating member in the flowing direction of the heat media in the connecting part, or in a position at a boundary between the connecting part and the first heat exchange chamber, the second regulating member serving as the regulating member; and
a dust removing mechanism that is disposed in a position between the second regulating member and the first regulating member in the flowing direction of the heat media in the connecting part, the dust removing mechanism removing dust that is finer than particles of the heat media.

By providing the second regulating member, the granular heat transfer medium (the first heat transfer medium) is retained in the first heat exchange chamber, and by opening the second regulating member, the first heat transfer medium can flow into the connecting part from the first heat exchange chamber. As described above, the predetermined region (the first region) in the first heat exchange chamber is filled with the granular heat transfer medium, and the particles are in close contact with each other. Therefore, movement of the particles may generate dust due to contact between particles, which may adhere to the surfaces of the particles. With the above configuration, since the dust removing mechanism is provided in the connecting part, dust that has adhered to the granular heat transfer medium during movement in the connecting part is removed. As a result, the quality of the granular heat transfer medium recovered via the second heat exchange chamber can be maintained and heat exchange efficiency is prevented from deteriorating even upon reuse.

Such a dust removing mechanism may include, for example, a sieve member having an opening smaller than the particle size of the particles of the granular heat transfer medium. The dust removing mechanism may be positioned below the second regulating member in the vertical direction. As a result, when the second regulating member is opened, the first heat transfer medium that had filled the first heat exchange chamber falls by gravity or flows along the inner wall of the connecting part, and the first heat transfer medium passes over the sieve member while having momentum, thus efficiently removing dust.

In a similar manner, the connecting part may include a stirring member configured to stir the granular heat transfer medium flowing inside the connecting part. By such a configuration, the first heat transfer medium moves in the connecting part while having momentum imparted by external force from the stirring member, so that it passes over the sieve member with momentum and dust can be efficiently removed.

Note that a dust removing mechanism may further be provided at a position downstream from the second heat exchange chamber, configured to remove dust from the particles of the granular heat transfer medium recovered from the second heat exchange chamber.

### EFFECT OF THE INVENTION

According to the heat exchanger of the present invention, the installation density of the heat transfer medium can be increased, while expanding the selection of the heat transfer medium usable as compared with the prior art.

### BRIEF DESCRIPTION OF THE DRAWINGS

Fig. 1 is a conceptual diagram schematically illustrating a configuration of an embodiment of a heat exchanger.
Fig. 2 is a partial view showing a vicinity of the first heat exchange chamber 10 in Fig. 1.
Fig. 3 is a partial view showing a vicinity of the second heat exchange chamber 20 in Fig. 1.
Fig. 4 is a partial view showing a vicinity of the second heat exchange chamber 20 in Fig. 1.
Fig. 5 is a partial view showing a vicinity of the second heat exchange chamber 20 in Fig. 1.
Fig. 6 is a diagram schematically illustrating a configuration of a heat exchange system including a cement plant facility.
Fig. 7 is a conceptual diagram schematically illustrating a configuration of another embodiment of the heat exchanger.

### MODE FOR CARRYING OUT THE INVENTION

Embodiments of the heat exchanger and heat exchange system according to the present invention will be described below with reference to the drawings. Note that each of the drawings described below is a schematic illustration, and the dimensional ratios shown in the drawings do not necessarily coincide with actual dimensional ratios, nor do they necessarily coincide among the respective drawings.

In each of the following drawings, the flow of gas is schematically illustrated by a dash-double-dotted line, and the flow of a solid (the granular heat transfer medium 3 described later) is schematically illustrated by a dash-dotted line.

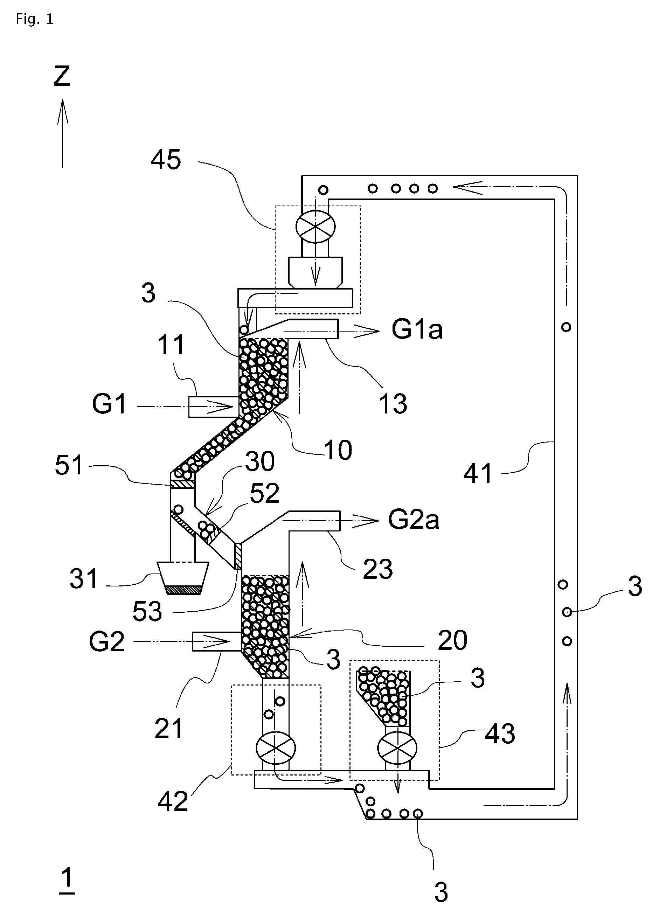

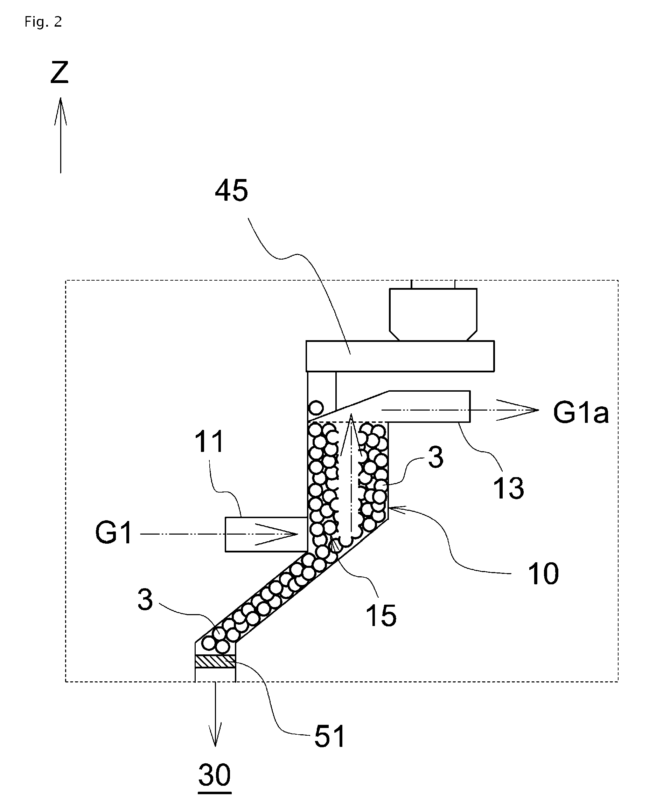

Fig. 1 is a conceptual diagram schematically illustrating a configuration of an embodiment of a heat exchanger. Figs. 2 to 5 are each partial views extracted from Fig. 1. The following description will be given with reference to Figs. 1 to 5.

A heat exchanger 1 illustrated in Fig. 1 includes a first heat exchange chamber 10, a second heat exchange chamber 20 positioned below the first heat exchange chamber 10 in the vertical direction, and a connecting part 30 that connects the first and second heat exchange chambers. In each drawing, the +Z direction corresponds to the vertically upward direction.

At least a part of the first heat exchange chamber 10 is filled with a granular heat transfer medium 3. In Fig. 2, the region filled with the granular heat transfer medium 3 is denoted as the "first region 15." Fig. 2 is a partial view showing the vicinity of the first heat exchange chamber 10 in the heat exchanger 1 of Fig. 1. The granular heat transfer medium 3 may be made of, for example, a general-purpose material such as a ceramic typified by alumina, or a metal typified by iron. The particle size of the granular heat transfer medium 3 is not particularly limited as long as it is large enough to be filled in the first region 15. For example, in consideration of dust clogging, the particle size is preferably 2 to 30mm, and more preferably 5 to 20mm.

The first heat exchange chamber 10 includes a first introduction port 11 configured to introduce high-temperature first gas G1, and a first discharge port 13 configured to discharge gas G1a after the first gas G1 has moved through the granular heat transfer medium 3 and exchanged heat. The first gas G1 introduced from the first introduction port 11 is blown into the first region 15 filled with the granular heat transfer medium 3 as described above. Since the first gas G1 introduced from the first introduction port 11 tends to flow vertically upward within the first heat exchange chamber 10, the first discharge port 13 is preferably positioned above the first introduction port 11 in the vertical direction.

The first gas G1 is high-temperature gas to be treated for heat exchange. As will be described later, the first gas G1 can be exhaust gas from a calcining furnace installed in a cement plant, and in this case, the temperature of the first gas G1 is about 800°C to 1,000°C. The first gas G1 may also be exhaust gas from a place other than a cement plant (for example, an ironworks, an incinerator, a power plant, or the like).

There may be cases where the probability of clogging is high, due to reasons such as a remarkably high dust content in the first gas G1. As a measure to suppress clogging, a classifier such as a cyclone may be installed upstream of the first introduction port 11 for the first gas G1. That is, it is also possible that the first gas G1, from which dust has been removed by the classifier, is introduced into the first introduction port 11.

In addition, when the first gas G1 contains chlorine or the like, clogging is also likely to occur. In such a case, control may be performed to lower the temperature of the first gas G1. For cooling the first gas G1, a branch duct may be provided upstream of the first introduction port 11, and a low-temperature gas such as carbon dioxide, oxygen, air, or water vapor may be introduced according to the first gas G1, or the first gas G1 may be cooled by sprinkling water.

The temperature and flow rate of the first gas G1 may be controlled based on a signal from a control unit (not shown). The signal from the control unit may correspond to the temperature of the granular heat transfer medium 3, as well as to the first gas G1 and the gas G1a guided to the first discharge port 13. In this case, a thermometer for measuring the temperature of the granular heat transfer medium 3 may be installed in the first heat exchange chamber 10; a thermometer for measuring the temperature of the first gas G1 may be installed in the first introduction port 11; and a thermometer for measuring the temperature of the gas G1a may be installed in the first discharge port 13.

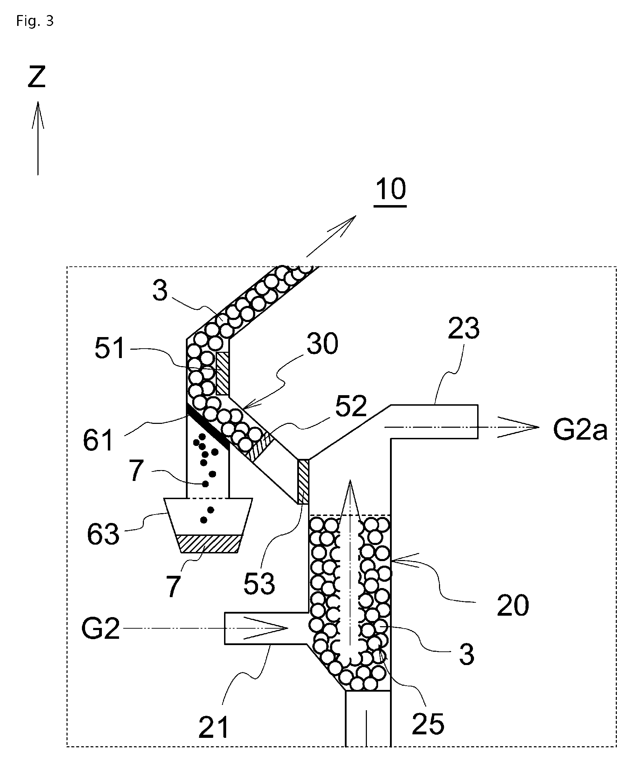

The high-temperature first gas G1 introduced through the first introduction port 11 passes through the first region 15 filled with the granular heat transfer medium 3, exchanges heat with the granular heat transfer medium 3, and is then discharged through the first discharge port 13 as gas G1a having a temperature lower than that of the first gas G1. In Fig. 2, some of the granular heat transfer medium 3 is omitted from the illustration to clearly indicate in the drawing that gas flows through the region filled with the granular heat transfer medium 3. In Fig. 3 and subsequent drawings, a similar illustration method may be adopted.

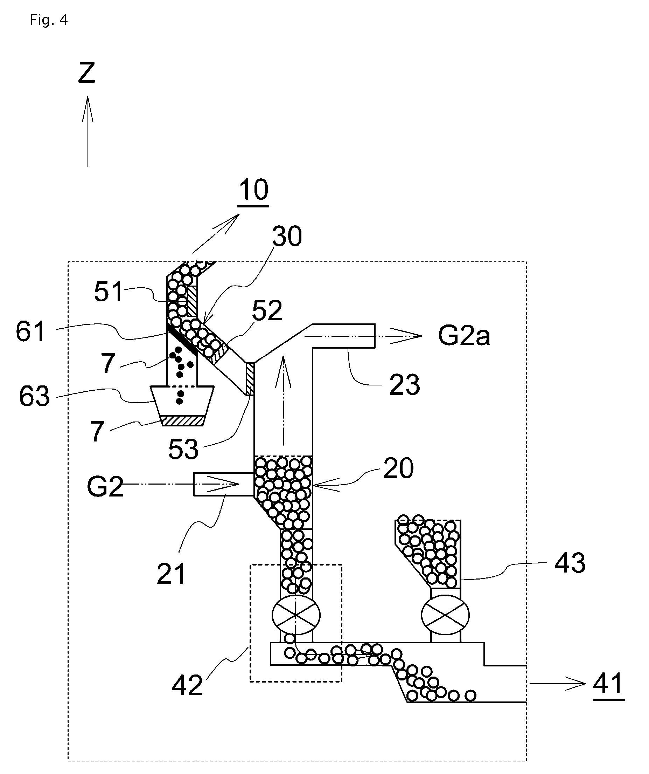

At least a part of the second heat exchange chamber 20 is filled with the granular heat transfer medium 3. In Figs. 3 and 4, the region filled with the granular heat transfer medium 3 is denoted as the "second region 25." Figs. 3 and 4 are partial views showing the vicinity of the second heat exchange chamber 20 in the heat exchanger 1 of Fig. 1. As described later, the granular heat transfer medium 3 present in the second heat exchange chamber 20 is introduced from the first heat exchange chamber 10, thereby filling the second region 25.

The second heat exchange chamber 20 includes a second introduction port 21 through which second gas G2 having a temperature lower than that of the first gas G1 is introduced, and a second discharge port 23 through which gas G2a, after the second gas G2 has moved through the granular heat transfer medium 3 and exchanged heat, is discharged. The second gas G2 introduced from the second introduction port 21 is blown into the second region 25 filled with the granular heat transfer medium 3 as described above. Since the second gas G2 introduced from the second introduction port 21 tends to flow vertically upward within the second heat exchange chamber 20, the second discharge port 23 is installed in a position vertically above the second introduction port 21.

As described later, the second heat exchange chamber 20 is filled with the granular heat transfer medium 3 that has been heated as a result of heat exchange in the first heat exchange chamber 10. The low-temperature second gas G2 introduced from the second introduction port 21 passes through the second region 25 filled with the high-temperature granular heat transfer medium 3, exchanges heat with the granular heat transfer medium 3, and is then discharged through the second discharge port 23 as gas G2a having a temperature higher than that of the second gas G2.

The second gas G2 is gas introduced for the purpose of cooling the granular heat transfer medium 3 whose temperature has risen due to heat exchange in the first heat exchange chamber 10, and may be, for example, air, carbon dioxide gas, oxygen gas, or another combustible gas.

The temperature and flow rate of the second gas G2 may be controlled based on a signal from a control unit (not shown). The signal from the control unit may correspond to the temperature of the granular heat transfer medium 3, as well as to the second gas G2 and the gas G2a guided to the second discharge port 23. In this case, a thermometer for measuring the temperature of the granular heat transfer medium 3 may be installed in the connecting part 30 and the second heat exchange chamber 20; a thermometer for measuring the temperature of the first gas G2 may be installed in the second introduction port 21; and a thermometer for measuring the temperature of the gas G2a may be installed in the second discharge port 23.

As described above, the connecting part 30 connects the first heat exchange chamber 10 and the second heat exchange chamber 20. Through the connecting part 30, the granular heat transfer medium 3 that was filled in the first heat exchange chamber 10 can be fed to the second heat exchange chamber 20.

The detailed structure of the connecting part 30 will be described. Figs. 3 to 5 are partial views showing the vicinity of the connecting part 30 in the heat exchanger 1 of Fig. 1.

As shown in Fig. 3, the connecting part 30 included in the heat exchanger 1 of the present embodiment is provided with regulating members (51, 52, and 53). These regulating members (51, 52, and 53) have the function of controlling the flow of the granular heat transfer medium 3. More specifically, each regulating member (51, 52, or 53) may be constituted by a partition plate, a valve, a rotary valve, a damper, a gate, a feeder, a pusher, or the like, and has the function of blocking the flow of the granular heat transfer medium 3 or releasing the blocked state. The opening of each regulating member (51, 52, and 53) may be controlled based on a signal from a control unit (not shown). At least one of the regulating members (51, 52, and 53) has a structure capable of blocking not only the flow of the granular heat transfer medium 3, but also the flow of gas.

Fig. 1 illustrates a state in which the regulating member 51 is closed, so that the granular heat transfer medium 3 in the first heat exchange chamber 10 is retained in the first heat exchange chamber 10. In the state shown in Fig. 1, the regulating member 53 is also closed. Therefore, the gas G2a, which has exchanged heat with the granular heat transfer medium 3 in the second heat exchange chamber 20 after the low-temperature second gas G2 is introduced, is not guided into the connecting part 30, and, as described above, is discharged from the second discharge port 23. As shown in Figs. 1 and 3, preferably, the second discharge port 23 is preferably positioned above the regulating member 53 in the vertical direction.

In the present embodiment, the regulating member 53 corresponds to the "first regulating member", and the regulating member 51 corresponds to the "second regulating member".

When heat exchange has been performed between the first gas G1 and the granular heat transfer medium 3 in the first heat exchange chamber 10 for a certain period of time or more, the temperature of the granular heat transfer medium 3 increases. As the temperature of the granular heat transfer medium 3 filled in the first heat exchange chamber 10 increases, the efficiency of heat exchange in the first heat exchange chamber 10 decreases. Therefore, the granular heat transfer medium 3 needs to be replaced with low-temperature granular heat transfer medium 3. Hereinafter, this method will be described.

First, as shown in Fig. 3, the regulating member 51 is opened. As a result, the granular heat transfer medium 3 retained in the first heat exchange chamber 10 is introduced into the connecting part 30. The opening of the regulating member 51 may be controlled by a control unit (not shown) based on a signal from the control unit according to, for example, the temperature of the first gas G1, the temperature of the granular heat transfer medium 3 in the first heat exchange chamber 10, the temperature of the gas G1a guided to the first discharge port 13, the elapsed time since the regulating member 51 was most recently closed, or the like. In this case, a thermometer for measuring the temperature of the granular heat transfer medium 3 may be installed in the first heat exchange chamber 10; a thermometer for measuring the temperature of the first gas G1 may be installed in the first introduction port 11; and a thermometer for measuring the temperature of the gas G1a guided to the first discharge port 13 may be installed in the first discharge port 13.

In the example shown in Fig. 3, a sieve member 61 is installed on a wall surface of a part of the connecting part 30. The sieve member 61 has an opening smaller than the particle size of the granular heat transfer medium 3. As the granular heat transfer medium 3 passes over the upper surface of the sieve member 61, fine dust 7 adhering to the surfaces of the granular heat transfer medium 3 falls below the sieve member 61 and accumulates in a dust collection unit 63. In the present embodiment, the sieve member 61 corresponds to the "dust removing mechanism." By causing the granular heat transfer medium 3 to pass over the upper surface of the sieve member 61, as described later, a reduction in heat exchange efficiency due to the dust 7 can be suppressed when the granular heat transfer medium 3 is reused in the first heat exchange chamber 10. However, whether the heat exchanger 1 includes the dust removing mechanism is optional.

When the granular heat transfer medium 3 that was filled in the first heat exchange chamber 10 is guided to the second heat exchange chamber 20, even when the opening of the regulating member 51 is opened, the regulating member 53 remains closed. Therefore, the relatively low-temperature gas G2a present in the second heat exchange chamber 20 is prevented from flowing back to the first heat exchange chamber 10 through the connecting part 30.

As shown in Figs. 1 and 4, the heat exchanger 1 includes a delivery mechanism 42. When the opening of the delivery mechanism 42 is opened, the granular heat transfer medium 3 that was filled in the second heat exchange chamber 20-more specifically, the granular heat transfer medium 3 that has been cooled as a result of heat exchange with the low-temperature second gas G2-is delivered to a conveyance mechanism 41. The delivery mechanism 42 may be constituted by, for example, a partition plate, a valve, a rotary valve, a damper, a gate, a feeder, a pusher, or the like.

The cooled granular heat transfer medium 3 delivered by the delivery mechanism 42 is raised by the conveyance mechanism 41 and conveyed to a heat transfer medium introduction mechanism 45 provided above the first heat exchange chamber 10. When the heat transfer medium introduction mechanism 45 is opened at a predetermined opening, the cooled granular heat transfer medium 3 is newly fed into the first heat exchange chamber 10. As shown in Fig. 1, a heat transfer medium storage mechanism 43 configured to deliver additional granular heat transfer medium 3 to the conveyance mechanism 41 may be installed. In this case, similarly to the delivery mechanism 42, the opening of a partition plate, a valve, a rotary valve, a damper, a gate, a feeder, a pusher, or the like may be adjusted so that new granular heat transfer medium 3 is fed to the conveyance mechanism 41. As the conveyance mechanism 41, a conveyor, a pneumatic transportation device, a feeder, a batch type lifting device, or the like may be used.

The amount of circulation of the granular heat transfer medium 3 in the heat transfer medium introduction mechanism 45 and the delivery mechanism 42 may be controlled based on a signal from a control unit (not shown). The signal from the control unit may correspond to the temperature of the granular heat transfer medium 3, the first gas G1, the gas G1a guided to the first discharge port 13, the second gas G2, or the gas G2a guided to the second discharge port 23. In this case, a thermometer for measuring the temperature of the granular heat transfer medium 3 may be installed in each of the heat transfer medium introduction mechanism 45, the first heat exchange chamber 10, the second heat exchange chamber 20, and the delivery mechanism 42; a thermometer for measuring the temperature of the first gas G1 may be installed in the first introduction port 11; a thermometer for measuring the temperature of the gas G1a may be installed in the first discharge port 13; a thermometer for measuring the temperature of the second gas G2 may be installed in the second introduction port 21; and a thermometer for measuring the temperature of the gas G2a may be installed in the second discharge port 23.

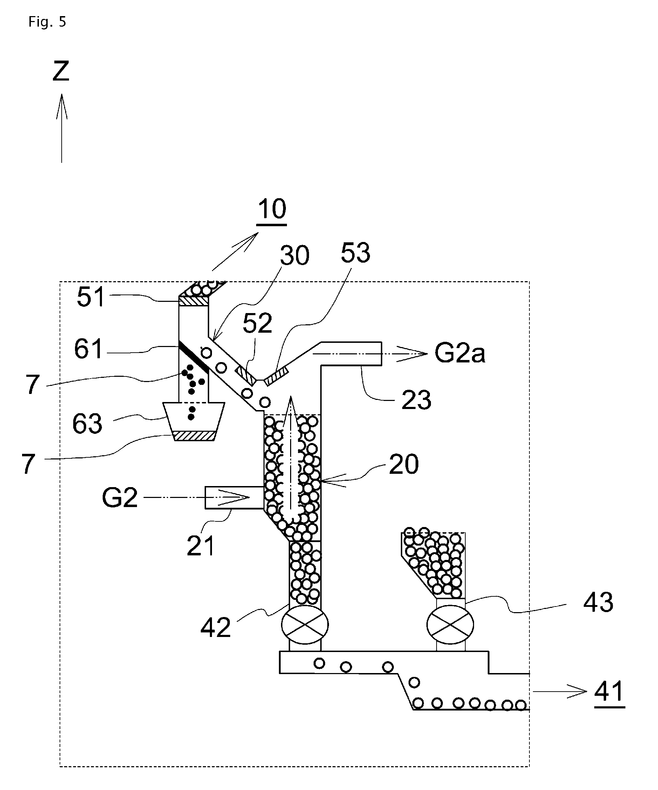

Next, as shown in Fig. 5, after the regulating member 51 has been closed, the regulating members 52 and 53 are opened. As a result, the granular heat transfer medium 3 retained in the connecting part 30, as described above with reference to Fig. 4, is introduced into the second heat exchange chamber 20. At this time, there is a possibility that a portion of the relatively low-temperature gas G2a present in the second heat exchange chamber 20 flows backward into the connecting part 30. However, since the regulating member 51 is closed, the connecting part 30 and the first heat exchange chamber 10 are thereby partitioned. In other words, the flow rate of gas is controlled by the regulating member 51. As a result, the relatively low-temperature gas G2a that has flowed backward into the connecting part 30 is prevented from flowing back into the first heat exchange chamber 10.

Thereafter, the regulating members 52 and 53 are closed, and the system once again enters the state shown in Fig. 1. In other words, according to the heat exchanger 1 described above, the granular heat transfer medium 3, whose temperature has risen due to heat exchange with the high-temperature first gas G1 in the first heat exchange chamber 10, is sent to the second heat exchange chamber 20, where it exchanges heat with the low-temperature second gas G2 and is cooled. Then, the granular heat transfer medium 3 is returned again to the first heat exchange chamber 10 by the conveyance mechanism 41.

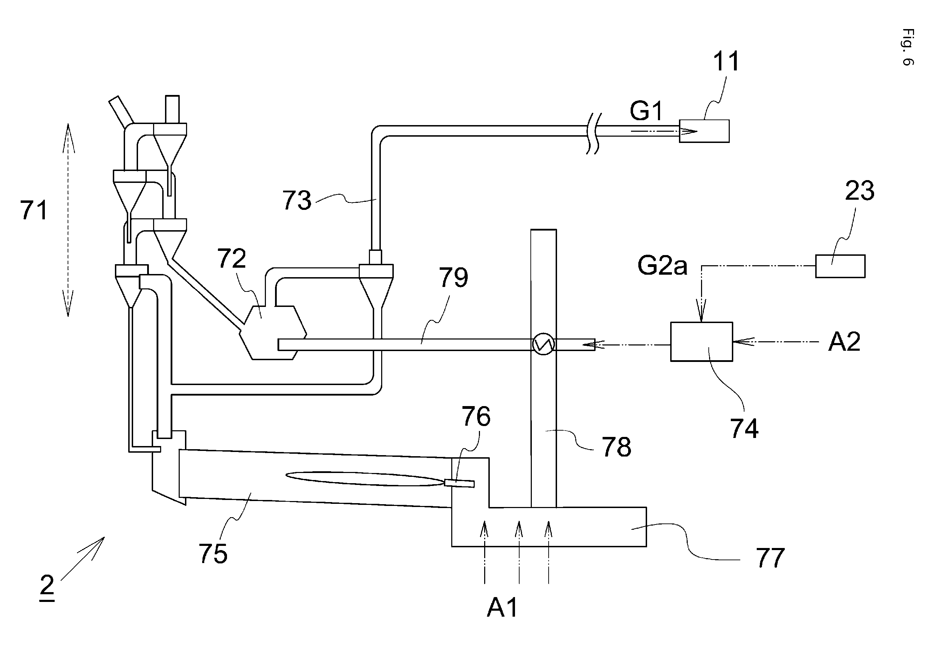

Fig. 6 is a diagram illustrating an example in which the heat exchanger 1 is used for heat exchange with exhaust gas in a cement plant 2. The cement plant 2 includes a preheater 71 for preheating cement clinker raw material, a rotary kiln 75 for firing the preheated cement clinker raw material using a burner 76, a calcining furnace 72 to promote the decarboxylation of the cement clinker raw material, and a clinker cooler 77 for cooling the fired cement clinker.

The calcining furnace 72 is arranged, together with the preheater 71, upstream from the rotary kiln 75 for the purpose of promoting decarboxylation of the cement clinker raw material. Combustion-supporting gas with an oxygen concentration higher than that of air is introduced into the calcining furnace 72 from a combustion-supporting gas supply device 74 via a flow passage 79, thereby heating and decarboxylating the cement clinker raw material. The decarboxylated cement clinker raw material is then sent to the rotary kiln. Examples of the combustion-supporting gas supply device 74 include an oxygen tank, an air separation device that separates oxygen from air, and a water electrolysis device that generates oxygen by electrolyzing water. Specifically, in the calcining furnace 72, calcium carbonate (CaCO₃), the main component of limestone contained in the cement clinker raw material, is heated and decomposed into quicklime (CaO) and carbon dioxide gas (CO₂).

When the cement clinker raw material is heated using combustion-supporting gas in the calcining furnace 72, the partial pressure of carbon dioxide increases. Therefore, the temperature required to promote decarboxylation becomes higher, and the temperature must be increased compared to a case where air is used as the combustion-supporting gas.

Accordingly, in the example shown in Fig. 6, the gas discharged from the second discharge port 23 provided in the second heat exchange chamber 20 of the heat exchanger 1-that is, the gas G2a, which is obtained by heat exchange of the low-temperature second gas G2 in the second heat exchange chamber 20 and thus has an increased temperature-is introduced into the combustion-supporting gas supply device 74. As a result, high-temperature combustion-supporting gas is generated. Although Fig. 6 shows an example in which the gas G2a is introduced directly into the combustion-supporting gas supply device 74, it is also possible to perform heat exchange between the combustion-supporting gas generated by the combustion-supporting gas supply device 74 and the high-temperature gas G2a discharged from the second discharge port 23.

Furthermore, in the example shown in Fig. 6, heat exchange is also performed between the high-temperature gas discharged from the clinker cooler 77 via an exhaust gas tower 78 and the combustion-supporting gas; however, this configuration is merely one example.

The exhaust gas discharged from the calcining furnace 72 through a calcining furnace exhaust gas discharge passage 73 has a high temperature of about 800°C to 1000°C. Therefore, in the example shown in Fig. 6, this exhaust gas from the calcining furnace 72 is introduced as the high-temperature first gas G1 into the first heat exchange chamber 10 through the first introduction port 11 of the heat exchanger 1 depicted in Fig. 1, where it exchanges heat with the granular heat transfer medium 3 as described above. If the dust content of the exhaust gas from the calcining furnace 72 is high, a classifier such as a cyclone may be installed upstream of the first introduction port 11 of the first gas G1 to prevent clogging, as described above. When the exhaust gas from the calcining furnace 72 contains a large amount of chlorine or the like, clogging is also likely. In such cases, control may be performed to lower the temperature of the first gas G1. For cooling the first gas G1, a branch duct may be provided upstream of the first introduction port 11, and low-temperature carbon dioxide gas, oxygen gas, or water vapor may be introduced according to the first gas G1. Alternatively, water may be sprayed onto the first gas G1.

Here, as the carbon dioxide gas, it is also possible to use a gas containing a high concentration of carbon dioxide that has been recovered from the exhaust gas of the calcining furnace 72 by means of a device for recovering carbon dioxide contained in the exhaust gas from the calcining furnace 72.

### [Other embodiments]

Hereinafter, other embodiments will be described.

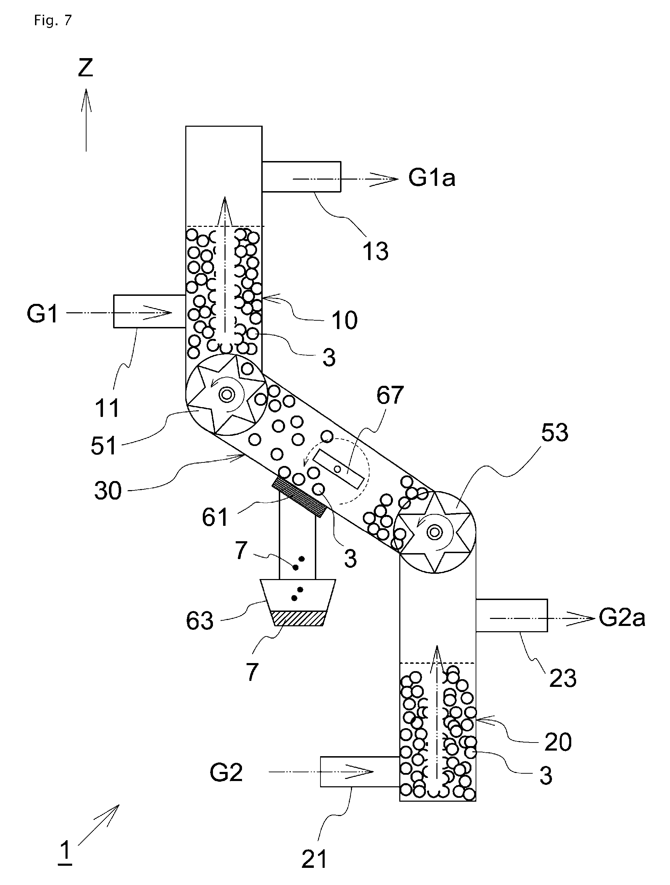

<1> Fig. 7 is a schematic diagram illustrating the configuration of another embodiment of the heat exchanger 1 in a manner similar to Fig. 1. In the heat exchanger 1 shown in Fig. 7, the structures of the regulating member 51 and the regulating member 53 differ.

As shown in Fig. 7, the regulating members 51 and 53 may be provided with shielding blade members, and may be configured so that, by rotation, it is possible to switch between a state in which a flow path is ensured and a state in which the flow path is regulated by the blade member.

In addition, the heat exchanger 1 shown in Fig. 7 is provided with a stirring member 67 in the connecting part 30. The stirring member 67 stirs the granular heat transfer medium 3 delivered from the first heat exchange chamber 10 into the connecting part 30, such that dust 7 adhering to the surfaces of the granular heat transfer medium 3 can be collected via the sieve member 61 serving as the dust removing mechanism. Note that the stirring member 67 may also be provided in the heat exchanger 1 illustrated in Fig. 1.

<2> The heat exchanger 1 illustrated in Fig. 1 includes a plurality of regulating members (51, 52, and 53). The heat exchanger 1 illustrated in Fig. 7 includes a plurality of regulating members (51 and 53). However, it is sufficient if the heat exchanger 1 can prevent the relatively low-temperature gas G2a present in the second heat exchange chamber 20 from flowing backward into the first heat exchange chamber 10. Therefore, it is sufficient as long as the heat exchanger 1 is provided with a regulating member at least in one place.

More specifically, a regulating member may be disposed at one or more locations between an end of the first region 15, which is filled with the granular heat transfer medium 3 in the first heat exchange chamber 10, on the side of the second heat exchange chamber 20, and an end of the second region 25, which is filled with the granular heat transfer medium 3 in the second heat exchange chamber 20, on the side of the first heat exchange chamber 10.

However, if a regulating member is provided in only one place, when the granular heat transfer medium 3 is discharged from the first heat exchange chamber 10 to the second heat exchange chamber 20, there is a possibility that the relatively low-temperature gas in the second heat exchange chamber 20 will flow backward into the first heat exchange chamber 10. For this reason, it is preferable that the regulating member be installed in two or more places.

<3> In the above embodiment, the heat exchanger 1 has been described as being provided with a connecting part 30 for connecting the first heat exchange chamber 10 and the second heat exchange chamber 20. However, the first heat exchange chamber 10 and the second heat exchange chamber 20 may also be directly connected. In this case, it is also acceptable for a regulating member to be disposed in the vicinity of the boundary between the first heat exchange chamber 10 and the second heat exchange chamber 20.

<4> The present invention is not limited to the embodiments described above, but includes various modifications. For example, the embodiments described above have been explained in detail to facilitate a better understanding of the present invention, and are not necessarily limited to those including all of the configurations described above. The scope of the present invention is defined by the claims, and it is intended that all modifications and equivalents within the meaning and scope of the claims are included.

### DESCRIPTION OF REFERENCE SIGNS

- 1: Heat exchanger
- 2: Cement plant
- 3: Granular heat transfer medium
- 7: Dust
- 10: First heat exchange chamber
- 11: First introduction port
- 13: First discharge port
- 15: First region
- 20: Second heat exchange chamber
- 21: Second introduction port
- 23: Second discharge port
- 25: Second region
- 30: Connecting part
- 41: Conveyance mechanism
- 42: Delivery mechanism
- 43: Heat transfer medium storage mechanism
- 45: Heat transfer medium introduction mechanism
- 51, 52, 53: Regulating member
- 61: Sieve member
- 63: Dust collection unit
- 67: Stirring member
- 71: Preheater
- 72: Calcining furnace
- 73: Calcining furnace exhaust gas discharge passage
- 74: Combustion-supporting gas supply device
- 75: Rotary kiln
- 76: Burner
- 77: Clinker cooler
- 78: Exhaust gas tower
- 79: Flow passage
- G1: First gas
- G2: Second gas

## Claims

1. A heat exchanger comprising:
a first heat exchange chamber including a first region filled with a granular heat transfer medium;
a first introduction port configured to introduce a high-temperature first gas to be treated into the first region;
a first discharge port positioned above the first introduction port in the vertical direction and configured to discharge gas from the first heat exchange chamber;
a second heat exchange chamber positioned below the first heat exchange chamber in the vertical direction and connecting with the first heat exchange chamber, the second heat exchange chamber including a second region filled with the granular heat transfer medium that has flowed in from the first heat exchange chamber;
a second introduction port configured to introduce a second gas, having a temperature lower than that of the first gas, into the second region;
a second discharge port positioned above the second introduction port in the vertical direction and configured to discharge gas from the second heat exchange chamber; and
a regulating member disposed at one or more locations between the end of the first region on the side of the second heat exchange chamber and the end of the second region on the side of the first heat exchange chamber, the regulating member being capable of controlling a gas flow rate.

2. The heat exchanger according to claim 1, further comprising:
a connecting part that connects the first heat exchange chamber and the second heat exchange chamber, and that guides to the second heat exchange chamber the granular heat transfer medium with which the first heat exchange chamber is filled; and
a first regulating member positioned on a downstream side of the first heat exchange chamber in a flowing direction of the granular heat transfer medium in the connecting part, or positioned at a boundary between the connecting part and the second heat exchange chamber, the first regulating member serving as the regulating member.

3. The heat exchanger according to claim 2, wherein the second discharge port is positioned above the first regulating member in the vertical direction.

4. The heat exchanger according to claim 2, further comprising:
a second regulating member positioned on an upstream side of the first regulating member in the flowing direction of the granular heat transfer medium in the connecting part, or positioned at a boundary between the connecting part and the first heat exchange chamber, the second regulating member serving as the regulating member; and
a dust removing mechanism positioned between the second regulating member and the first regulating member in the flowing direction of the granular heat transfer medium in the connecting part, the dust removing mechanism being configured to remove dust finer than particles of the granular heat transfer medium.

5. The heat exchanger according to claim 4, wherein the dust removing mechanism includes a sieve member having an opening smaller than a particle size of the particles of the granular heat transfer medium, and is positioned below the second regulating member in the vertical direction.

6. The heat exchanger according to claim 5, wherein the connecting part includes a stirring member configured to stir the granular heat transfer medium flowing inside the connecting part.

7. The heat exchanger according to any one of claims 1 to 6, wherein the regulating member is openable and closable.

8. The heat exchanger according to claim 1, further comprising a thermometer installed in one or more locations selected from a group consisting of the first introduction port, the first discharge port, the second introduction port, and the second discharge port,
wherein an opening of the regulating member is adjusted based on temperature information that has been measured by the thermometer.

9. The heat exchanger according to claim 1, further comprising a classifier disposed in a preceding stage of at least one of the first introduction port and the second introduction port.

10. The heat exchanger according to any one of claims 1 to 6, further comprising a conveyance mechanism configured to cause the granular heat transfer medium recovered from the second heat exchange chamber to flow into the first heat exchange chamber from above.

11. A heat exchange system comprising the heat exchanger according to any one of claims 1 to 6,
wherein exhaust gas from a calcining furnace disposed in a cement plant is introduced, as the first gas, through the first introduction port into the first heat exchange chamber, and
gas discharged through the second discharge port preheats combustion-supporting gas introduced into the calcining furnace.

12. A heat exchange system comprising the heat exchanger according to any one of claims 1 to 6,
wherein carbon dioxide-containing gas is introduced, as the first gas, through the first introduction port into the first heat exchange chamber, the carbon dioxide-containing gas containing carbon dioxide recovered from exhaust gas from a calcining furnace disposed in a cement plant, and
gas discharged through the second discharge port preheats combustion-supporting gas introduced into the calcining furnace.
